# EUROPEAN PATENT APPLICATION

(11) **EP 4 134 230 A1**
(43) Date of publication of application: **15.02.2023**
(21) Application number: 21382753.8
(22) Date of filing: 09.08.2021
(51) Int. Cl.: B32B 7/027, B32B 5/26, B32B 19/04, B32B 19/06, E04B 1/62, F24F 13/02

(54) **INSULATION PANEL**

(71) Applicant: URSA Insulation, S.A., 28004 Madrid (ES)
(72) Inventor: RECAJ GONZÁLEZ, Victoria, 28006 Madrid (ES); TORRIJOS HIJÓN, Miguel Ángel, 28007 Madrid (ES); URIZ SOLÁ, Pedro, 43151 Els Pallaresos (ES); CASADO DOMÍNGUEZ, Arturo Luis, 28860 Paracuellos de Jarama (ES)
(74) Representative: Balder IP Law, S.L.

(57) **Abstract**

The present invention refers to an insulation panel comprising a board of mineral wool, a layer of non-woven mineral fibers, and a layer of a woven glass fiber fabric, wherein the layer of non-woven mineral fibers is located between the board of mineral wool and the layer of woven glass fiber fabric, its use for thermal and sound insulation, particularly for façades and ducts.

## Description

### TECNICAL FIELD AND INSUSTRIAL APPLICABILITY OF THE INVENTION

The present invention refers to an insulation panel comprising a board of mineral wool, a layer of non-woven mineral fibers, and a layer of a woven glass fiber fabric, wherein the layer of non-woven mineral fibers is located between the board of mineral wool and the layer of woven glass fiber fabric. The invention further refers to specific applications of such insulation panel for the purpose of thermal and sound insulation, particularly for façades and ducts.

### BACKGROUND OF THE INVENTION

Multilayer insulation panels are used in different applications, e.g. to insulate buildings in residential structures such as single-family homes, apartment buildings, hotels and senior living facilities, medium to large industrial and office buildings such as skyscrapers and hospitals.

Multilayer insulation panels are also used to make self-bearing ducts applied for HVAC (Heat Ventilation Air Conditioning) purposes.

Various designs of such multilayer insulation panels are known, but they are afflicted with several drawbacks when used for specific applications.

For instance, the façades of buildings are recently thermally and acoustically insulated by applying insulating elements externally to the structural elements. For this purpose, the use of generically called "External Thermal Insulation Composite System" (abbreviated as ETICS) is nowadays well established. ETICS commonly comprise a layer of insulation elements arranged externally on the surface of a structural element, fastening devices erecting through the thickness of the insulation elements and fixed to the structural element, a coating (e.g. mesh-reinforced mortar) applied to the external surface of the insulation elements, and optionally a finishing layer such as dyed mortar acting as an aesthetic and/or protective layer of the outer surface of the system.

The insulation elements in these insulation systems are usually formed by panels made of polymer foam (expanded polystyrene (EPS), extruded polystyrene (XPS), polyurethane, etc.), fibrous insulating materials (glass wool, stone wool, wood or lignocellulose wool), or other more complex composite materials. As a result of the mechanical stress to which the insulation elements are subjected to in this type of application (such as compression forces applied during application (e.g. applied by the fixation elements), impacts, or traction (tensile forces) caused by the wind suction or the own weight of the system), the insulation elements are required to have high mechanical robustness and resistance against compression and tensile forces and/or tearing forces, particularly in the direction of the thickness of the insulation elements.

The use of insulation materials, comprising mineral wool and non-woven mineral fibers in ETICS presents therefore certain challenges. Due to the usually less compacted fiber structure of these materials and lower achievable maximal density limited by its production method, mineral wool and mineral fibers are normally more compressible and flexible and have a high tendency to disaggregation resulting in a lower resistance against piercing or tearing in the direction of their thickness (i.e. perpendicular to the major surface). Despite this, there is an interest in using ETICS having mineral wool and fibers, since in general they offer excellent thermal and acoustic insulation.

ETICS comprising insulation elements with layers of different rigidity have been described in the state-of-the art. In these systems, a softer, more flexible fiber layer is arranged closer to the structural elements referred to as the internal layer. A harder, more rigid layer is located further away from the structural elements, referred to as the external layer. The harder layer serves as a resilient base for the rendering coating and can withstand higher mechanical stresses applied to the insulation element. The softer layer reduces the weight of the insulation element, contributes to an improved thermal and acoustic insulation capacity, and is more flexible. It can adapt itself better to contours and irregularities that might be present on the surface of the structural element.

Spacer fastening devices are described which extend through the internal and external layers in the insulation element and which are fixed firmly to the structural element. In this type of systems, the surface of the structural element does not need to be extensively prepared before the insulation elements are arranged onto it, such as to avoid the additional application of a rendering layer to smooth and eliminate unevenness or irregularities. Moreover, the application of a binding agent, e.g. bonding mortar for bonding the insulation elements to the structural element, can be omitted, and with it also the need of applying a primer for improving adhesion of the binding agent to the surface of the structural element. External insulation systems comprising multilayer insulation elements of this type, as well as a spacer fastening means for these systems are described in the prior art.

Ventilated façades are considered to be the most efficient system to solve general insulation issues in buildings, eliminating the thermal bridges and condensation problems. A typical ventilated facade system includes an outer skin, for example made of glass, ceramic, stone, metal or the like, which is set with an air gap, a distance, by means of holding elements in front of an existing facade. The air gap between the insulation and outer skin or cladding, provides a ventilated air chamber that avoids the build-up of condensation because air is cooled down below the dew-point. As a general rule, the exterior cladding will always be either cooler or warmer than the air in the ventilated air chamber. Thus, during summer, the air chamber works like a chimney, i.e. sunlight hits the façades, thereby heating up the cladding and the air chamber. The heated air in the air chamber then rises, making room for cooler air to cool down the chamber and maintaining the comfort inside the home. In winter, solar radiation is not as strong as to produce the chimney effect. However, the air inside the chamber remains warmer than the outer air, thereby acting as a heat accumulator that maintains the system's thermal stability along with the thermal insulation that is attached to the supporting wall.

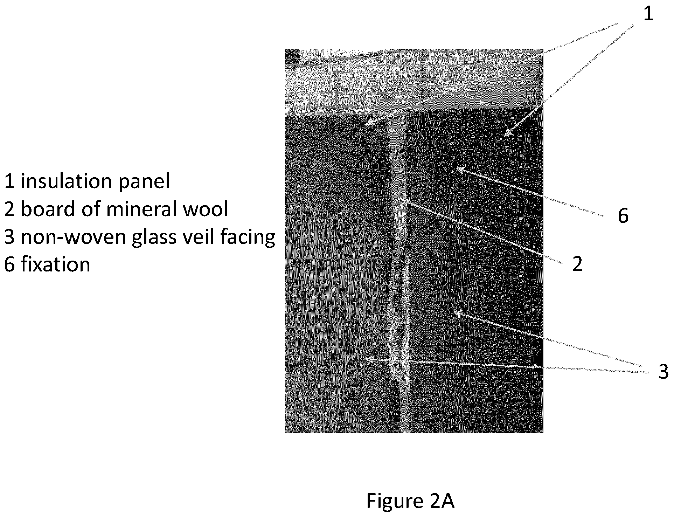

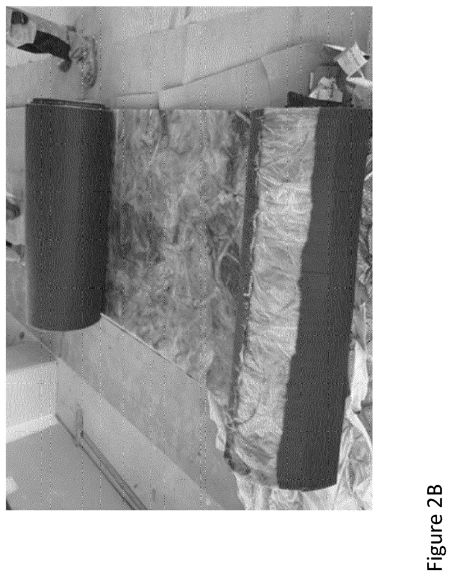

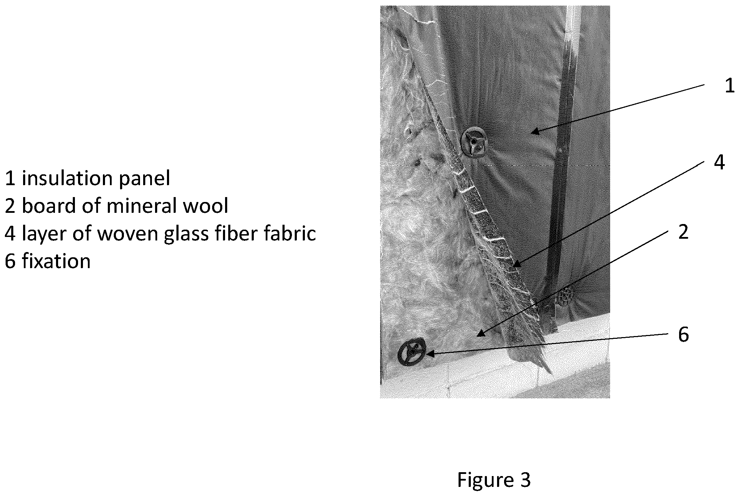

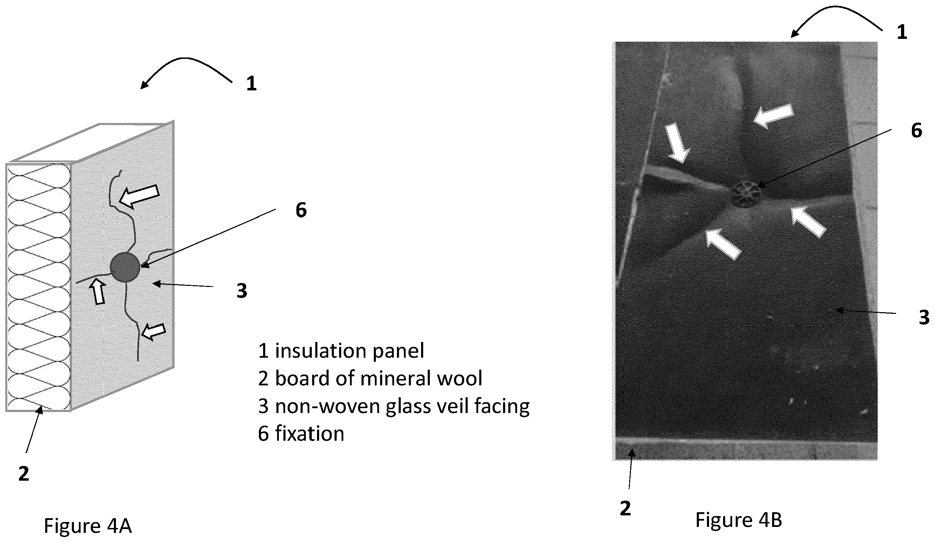

Insulation panels in ventilated façades usually have a compressible mineral wool material on the internal side facing to the structural element and a facing that - on the one hand - particularly protects the inner layer from rain, humidity, etc., and - on the other hand - provides the desired aesthetic characteristics. Particularly, glass wool is an excellent option for ventilated façades due to its thermal insulation properties. However, the use of glass wool particularly in ventilated façades may have some problems. For instance, poor installation or incorrect fixation of glass wool may lead to a loss of product performance. Moreover, it is a common problem of conventional panels that the facing tears. Thus, for example figure 2A shows the tearing of a non-woven glass veil facing of a mineral wool insulation panel after being exposed to wind action. Figure 2B shows the tearing of a non-woven glass veil facing of a mineral wool insulation panel when compression has been applied on the insultation panel to form a roll for packaging. Likewise, Figure 3 shows a mineral wool insulation panel covered with a woven facing that is peeled off due to sail effect after being subjected to weathering. In this case, glass wool facing ungluing and tearing is also observed. Moreover, improper installation of the panels at the structural element results in a cushion-like surface also known as quilt or mattress effect. Figure 4A shows an scheme of the mattress effect, and Fig. 4B shows the quilt or mattress effect produced during installation of a mineral wool insulation panel covered with a non-woven glass veil facing and the creases generated as result.

WO 2014/090707 describes double-layer insulation materials, comprising a compressible internal layer and an incompressible external layer. The incompressible layer might comprise a large list of materials, among others also mineral wool. A shank is pre-installed, preferably factory assembled, along a pre-drilled hole in the panel entirely within the body of the incompressible external layer. The shank has an external screw thread to advance and secure it in its desired position. Fixation of such double layer insulation materials to a structural element is highly complex and requires a certain expertise by the construction workers.

EP 3 348 725 discloses an insulation panel comprising glass wool, having a rigid external layer and a compressible internal layer. The insulation panel may comprise a reinforcing web on any of the two major surfaces of the panel. The insulation panel is fixed to a structural element by way of a spacer fastening device having a specific design. The fastening device can be arbitrarily mounted over the entire major surface of the insulation panel, i.e. no specific drillings are necessary, which enables greater flexibility, compared to the panels described in WO 2014/090707. However, piercing of the insulation panel with the fastening device necessarily requires puncture of the panel with a knife or a drilling machine, which complicates an easy and time-efficient installation at the construction site.

DE 35 19 752 C2 describes a mineral wool insulating panel on which a cover layer of a glass non-woven fabric having a grammage of 30 to 110 g / m² is provided. The cover layer ensures, depending on the application, the dimensional stability of the product. In particular, when said panels are used for ventilated façades, they provide better handling, pressure distribution and resistance to detachment in the case of dowel fastening, etc.

Similarly to ventilated façades, air circulation systems including air ducts are incorporated into most building structures. The air ducts extend from a central source that may include means for heating, ventilating, and/or cooling the air, to regions throughout the building. The air itself is usually forced or blown throughout the system by means of fans or blowers, respectively. As in ventilated façades, suitable air ducts should have walls of a rigid structure, of low thermal conductivity and be relatively moisture impermeable. The material employed in the conduit should be fire-resistant and of adequate strength to avoid breakage. Thus, for example ES1073660Y discloses a panel of mineral wool whose faces are coated suitable for the manufacture of rectangular air distribution ducts in heating, ventilation and air conditioning (HVAC) installations. US 5,918,644 discloses an air conveying duct having a foam core sealed on the inside and reinforced on the outside with a reinforcing material selected from a foil scrimmed KRAFT paper (FSK) and a foil scrimmed vinyl (FSV) KRAFT paper.

The problem underlying the present invention is to overcome the drawbacks of insulation panels, especially multilayer insulation panels, and which - as described above - are particularly suitable to be used for ventilated facades and self-bearing ducts (HVAC). Thus, it is the objective to identify a common multilayer structure of an insulation panel, which is suitable to be used in different applications which impose different technical requirements. In particular, there is a need for insulation panels that exhibit good thermal and acoustic insulation properties as well as sufficient fire resistance characteristics and which are simultaneously resistant to tearing, peeling off and quilting.

Additionally, the panels shall allow easy and fast installation and withstand harsh weather conditions once mounted at the structural element.

The problem is surprisingly solved by an insulation panel as described below.

### SUMMARY OF THE INVENTION

Thus, in one aspect, the present invention relates to an insulation panel (1) comprising
- a board of mineral wool (2),
- a layer of non-woven mineral fibers (3); and
- a layer of a woven glass fiber fabric (4),
wherein the layer of non-woven mineral fibers (3) is located between the board of mineral wool (2) and the layer of woven glass fiber fabric (4), and
wherein the layer of woven glass fiber fabric (4) has a scrim dimension of 0.5-10 mm x 0.5-10 mm.

In a further aspect, the present invention relates to a method for preparing an insulation panel (1) comprising the steps
(a) providing a board of mineral wool (2),
(b) providing a layer of non-woven mineral fibers (3) attached to a layer of woven glass fiber fabric (4),
(c) attaching the layer of non-woven mineral fibers (3) of step b) to the board of mineral wool (2), such that the layer of non-woven mineral fibers (3) is located between the board of mineral wool (2) and the layer of woven glass fiber fabric (4), wherein the layer of woven glass fiber fabric (4) is selected to a have a scrim dimension of 0.5-10 mm x 0.5-10 mm.

In a further aspect, the invention relates to a building outer wall comprising a supporting wall and at least one insulation panel (1) according to the invention.

In a further aspect, the invention relates to the use of an insulation panel (1) according to the invention for thermal and/or sound insulation.

In a further aspect, the invention relates to the use of an insulation panel (1) according to the invention for façades, preferably ventilated façades.

In a further aspect, the invention relates to façades, preferably ventilated façades, comprising at least one insulation panel (1) according to the invention.

In a further aspect, the invention relates to the use of an insulation panel (1) according to the invention for ducts.

In a further aspect, the invention relates to ducts comprising at least one insulation panel (1) according to the invention.

It is the advantage of the present invention that insulation panels (1) according to the invention can be pierced with fixation means by hand (without the need of tools such as knives, etc.).

It is another advantage of the present invention that insulation panels (1) according to the invention, which are mounted to a supporting wall, withstand weather conditions with strong wind, heavy rain, high temperatures and sunlight.

It is another advantage of the present invention that insulation panels (1) according to the invention which are mounted to a supporting wall do not suffer tearing of the facing, particularly in the corners and joints where most exposed to wind.

It is another advantage of the present invention that insulation panels (1) according to the invention which are mounted to a supporting wall do not suffer peeling off the facing.

It is another advantage of the present invention that insulation panels (1) according to the invention are prevented from forming cushion-like surface (also known as quilt or mattress effect) after installation.

It is another advantage of the invention that insulation panels (1) according to the invention can be used for a variety of different applications, namely for the insulation of building outer walls, façades and particularly ventilated façades.

It is another advantage of the invention that insulation panels (1) according to the invention can be used to manufacture self-bearing ducts, preferably for ventilation ducts, and air conditioning ducts (HVAC).

### BRIEF DESCRIPTION OF THE DRAWINGS

Figure 1A - Schematic drawing of an inventive insulation panel (1) containing: a board of mineral wool (2), a layer of non-woven mineral fibers (3), and a layer of a woven glass fiber fabric (4).
Figure 1B - cross sectional view of a particular embodiment further including an aluminum layer (5).
Figure 2A - Tearing of the facing of a mineral wool insulation panel of the prior art 1 with a non-woven glass veil facing 3 attached to a board of mineral wool 2, as result of the exposition to the wind. The insulation panel 1 is mounted to the wall by fixation 6.
Figure 2B - Tearing of the facing of a mineral wool insulation panel of the prior art with a non-woven glass veil facing, as a result of compression applied to form a roll for packaging.
Figure 3 -Peeling-off of the facing of an insulation panel of the prior art 1 including a board of mineral wool 2 and a woven glass fiber fabric 4, due to sail effect produced after being subjected to weathering. The insulation panel 1 is mounted to the wall by fixation 6.
Figure 4A - Quilt Effect of a mineral wool insulation panel 1 of the prior art. A mineral wool layer 2 is covered with a non-woven glass veil facing 3. In the vicinity to the fixation 6 creases produced by the quilt effect are marked with white arrows (scheme).
Figure 4B - Quilt Effect of a mineral wool insulation panel of the prior art 1 covered with a non-woven glass veil facing 3 (photograph). The creases produced by the quilt effect are marked with white arrows.
Figure 5A - schematic diagram of ventilated façades; general view showing the different parts of a conventional ventilated façade including: A) cladding, B) bracket, C) profile, D) insulation panel, E) fixations and F) supporting wall.
Figure 5B - sectional view of a conventional ventilated façade including: A) cladding, B) bracket, C) profile, D) insulation panel, E) mechanical fixing, F) supporting wall and J) air chamber.
Figure 6 - schematic diagram of a ventilated façade comprising the insulation panel (1) according to the present invention, including: A) cladding, B) bracket, C) profile, D) board of mineral wool, E) mechanical fixings, F) supporting wall, G) layer of non-woven mineral fibers disposed on the mineral wool board and H) layer of woven glass fiber fabric disposed on the non-woven mineral fibers. An air chamber J) is formed between the cladding and the insulation panel (1).
Figure 7A - schematic diagram of an edge-trimmed and shaped groove panel that can be folded to form a ventilation duct 7, including an insulating panel 1 according to the invention with an aluminum facing 5.
Figure 7B - cross sectional view of an edge-trimmed and shaped groove panel that can be folded to form a ventilation duct, wherein the panel is an insulating panel (1) according to the invention comprising: board of mineral wool (2), a layer of non-woven mineral fibers (3), a layer of a woven glass fiber fabric (4) and an aluminum layer (5).
Figure 8 - Insulation panel (1) according to the invention wherein no peeling off and tearing of the facing is observed under weathering conditions.

### DETAILED DESCRIPTION, PREFERRED EMBODIMENTS AND EXAMPLES OF THE INVENTION

Thus, in a first aspect, the present invention relates to an insulation panel (1) comprising
- a board of mineral wool (2),
- a layer of non-woven mineral fibers (3); and
- a layer of a woven glass fiber fabric (4),
wherein the layer of non-woven mineral fibers (3) is located between the board of mineral wool (2) and the layer of the woven glass fiber fabric (4), and wherein the layer of woven glass fiber fabric (4) has a scrim dimension of 0.5-10 mm x 0.5-10 mm.

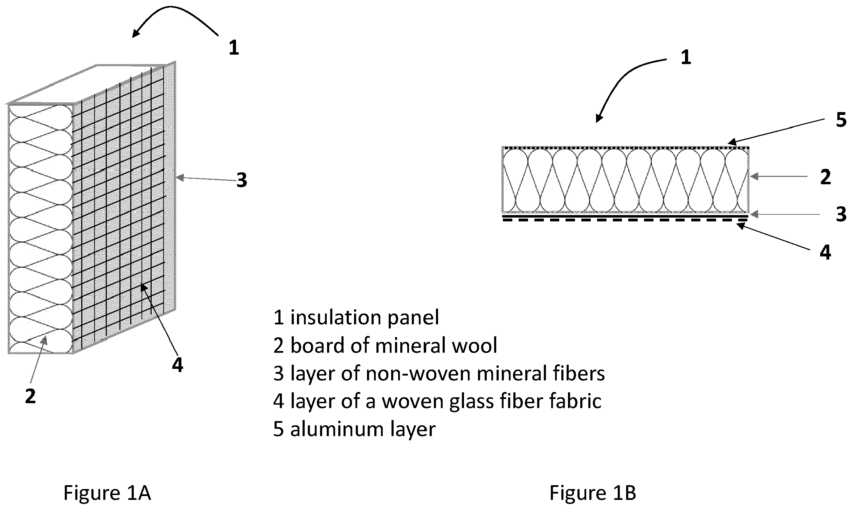

Figure 1A shows an exemplary schematic cross section of the insulation panel (1) of the invention comprising a board of mineral wool (2), a layer of non-woven mineral fibers (3), and a layer of a woven glass fiber fabric (4).

Mineral wool of the board of mineral wool (2) in the insulation panel (1) is any fibrous material formed by spinning or drawing molten mineral or rock materials, such as glass, slag and ceramics. In the context of the present invention, the term "mineral wool" refers to mineral fiber, man-made mineral fiber (MMMF) or man-made vitreous fiber (MMVF). The mineral wool used for the board of mineral wool (2) in the insulation panel (1) is preferably glass wool, stone wool, ceramic wool or mixtures thereof, more preferably glass wool. In a preferred embodiment, the glass wool is laminar or crimped glass wool (also referred to as creped glass wool), more preferably laminar glass wool.

Glass wool is a material formed by an intricate network of glass fibers, which can be bonded in their crossover points by different means, e.g. by using a filament binder, such as a curable phenol-formaldehyde resole based filament binder or a formaldehyde-free resin.

As used herein, the term "resole" refers to a reactive mixture with methylol functional groups, which undergo a self-curing reaction under influence of heat or acids. The resoles are thus partially reacted thermosets, also known as resins, prepolymers or precondensates, stable at low temperature and alkaline pH, and which can be further condensed to a thermoset in a curing reaction by application of heat and/or at acidic pH value. The skilled person is aware of how such resole is commonly manufactured and recognizes how to modify the different reaction phases and parameters to obtain the characteristics required for the respective purpose. Such parameters include e.g. the phenol:formaldehyde molar ratio, the catalyst type and amount, and the condensation reaction time and temperature.

The curable phenol-formaldehyde resole based filament binder may comprise a first amount of urea (U1), a phenol-formaldehyde-urea prereact or a mixture thereof. As used herein, the term "phenol-formaldehyde-urea prereact" refers to a reaction product of an aqueous phenol-formaldehyde resole and a second amount of urea (U2) carried out for at least 1 hour, in particular at least 2 hours, at a temperature lower than 70°C, in particular between 20°C and 60°C.

Other suitable phenol-formaldehyde resole based filament binder includes phenol-formaldehyde-amine condensates. In a preferred embodiment the amine in the phenol-formaldehyde-amine condensates is an alkanolamine or a cyclic amine.

The filament binder of the glass wool board may be a curable formaldehyde-free resin. The expression "formaldehyde-free" means that no or essentially no formaldehyde
- is contained in the resin,
- is released from the resin,
- is released from a filament binder containing the resin,
- is released by curing the resin, or
- is released from a mineral wool product containing the resin.

A suitable curable formaldehyde-free resin may comprise
component a) a reducing sugar,
component b) a polycarboxylic acid,
component c) epoxysilane, and
optionally component d) one or more polyols having a molecular weight of less than 1000 g/mol,
wherein the amount of component c) may be from 0.1 wt.-% to less than or equal to 3 wt.-% with respect to the sum of components a) and b).

The reducing sugar in the resin composition can be a polysaccharide selected from starches and dextrines, preferably maltodextrines.

Other suitable curable formaldehyde-free resin may comprise reaction products of an amine component and a reducing sugar. Said resin can be made via a Maillard reaction forming polymeric melanoidins. The amine component can be selected from amine, ammonium salt, etc.

Processes for the production of glass wool products are well-known in the art and usually comprise the steps of melting the mineral material to an adequate temperature, fiberizing the molten mixture into fine fibers, applying (e.g. spraying) a filament binder composition to the individual fibers, collecting fibers and forming a pre-formed substrate on a conveyor, optionally densifying the substrate and curing the filament binder at elevated temperatures. The cured mat is then cut to the desired size with a transverse and edge-trimmer. The glass wool comprises glass fibers and filament binders, wherein the main components of the glass wool are the glass fibers having more than 70 wt.-%, preferably more than 80 wt.-% relative to the overall weight of the material. The term "glass wool" in the sense of the present invention is preferably a material, wherein the filament binder is applied only to the individual fibers, i.e. the filament binder is not applied to or soaked into the pre-formed substrate.

Laminar glass wool or glass wool with a laminar orientation of the fibers means that the fibers forming the glass wool are predominantly oriented parallel to the major surfaces (i.e. perpendicular to the thickness) of the mat as produced in the manufacturing line. The laminar configuration of the fibers results from the deposition of the as-formed fibers on the conveyor.

By contrast, in crimped glass wool, a relevant proportion of the fibers are perpendicularly oriented to the major surfaces so as to obtain products, particularly boards with high mechanical compressive strengths. Methods to produce crimped (creped) mineral wool fiber boards are well-known in the art: In EP 0 507 653 A1 a device is described to make crimped mineral wool mats. EP 0 133 083 A1 describes a method to manufacture crimped mineral fiber felts and a device used in such a method. EP 1 283 196 A1 describes a plaster-based facade insulation board of crimped mineral wool and a method to manufacture such a board.

The glass fiber used for making glass wool is preferably characterized by having a weight ratio of alkali metal oxides (such as K₂O and Na₂O) to alkaline earth metal oxides (such as MgO and CaO) higher than 1. Glass fibers are therefore clearly distinguished from stone wool or slag wool fibers having a weight ratio of alkali oxides to alkaline earth oxides of less than 1.

The density of the board of mineral wool (2) can vary in a wide range, thus even reaching values up to 400 kg/m³. Preferably, the density of the board of mineral wool is in the range of 5-180 kg/m³, more preferably in the range of 5-45 kg/m³, and even more preferably in the range of 20-45 kg/m³ (measured according to UNE EN 823:2013 for measuring the thickness of thermal insulating products from which density can be calculated from the length and width dimensions and the weight of the sample).

The density of the insulation panel (1) of the invention can be selected within the mentioned range of 5 to 180 kg/m³. Thus, for example, when the insulation panel (1) is used for ventilated façades, the density of the board of mineral wool (2) is preferably comprised between 20 and 50 kg/m³, more preferably between 30 and 40 kg/m³. On the other hand, when the insulation panel (1) is used for ventilation ducts, the density of the board of mineral wool is preferably comprised between 50 and 90 kg/m³, preferably between 60 and 70 kg/m³.

Preferably, the thickness of the board of mineral wool (2) is about 18-300 mm, preferably between 60 and 200 mm (measured according to UNE EN 823:2013). The thickness of the board of mineral wool (2) is preferably selected for each intended application within the mentioned range of between 18 and 300 mm. Thus, for example when the insulation panel (1) is used in ventilated façades, the thickness of the board of mineral wool (2) is preferably between 60 and 200 mm. When the insulation panel (1) is used in ventilation ducts or air conditioning ducts, the thickness of the board of mineral wool (2) is preferably between 20 and 40 mm.

The mineral fiber in the layer of non-woven mineral fibers (3) may be glass fiber (as described above), ceramic fiber, stone fiber, or mixtures thereof, preferably glass fiber. Layer of non-woven mineral fibers (3) is preferably a veil. In the context of the present invention, the term "veil" is understood to mean a thin sheet of non-woven material.

More preferably, the layer of non-woven mineral fibers (3) has a grammage of 20-150 g/m², more preferably 40-50 g/m². The term "grammage", also called basis weight, refers to the mass in grams per unit area, and is usually applied to sheets of for example fabrics or veils. The grammage is measured in GSM, that is Grams per Square Meter (g/m²) and refers to the weight of a sheet of material which is one meter by one meter square and measured in grams.

Typically, the thickness of the layer of non-woven mineral fibers (3) is between about 75 µm and 500 µm, preferably between 100 and 300 µm.

The layer of non-woven mineral fibers (3) may be prepared by known techniques for manufacturing a veil, such as dry laying, wet laying, spunbonding and melt blowing. An example for making a layer of non-woven mineral fibers (3) by wet laying is described in WO 99/45198 A1 and WO 98/11299 A1, respectively.

The board of mineral wool (2) is preferably different from the layer of non-woven mineral fibers (3), e.g. in view of material, density, GSM, and porosity. In a preferred embodiment, a filament binder is applied to, preferably soaked into, the pre-formed non-woven mineral fiber substrate to form the layer of non-woven mineral fibers (3).

The layer of a woven glass fiber fabric (4) is a woven glass fiber fabric. Preferably, the fabric has an orthogonal, particularly regular orthogonal, scrim structure made of individual glass fibers that intersect perpendicularly creating openings through the fabric area. Thus, the woven layer presents an open mesh structure with openings distributed through the whole surface. The glass fiber diameter of the woven glass fiber fabric is preferably comprised between 10 and 20 µm. Preferably, the glass fibers have a linear density of between 60 and 70 tex (grams per 1,000 meters of yarn), preferably from 65 to 68 tex. A yarn is a spun agglomeration of a plurality of such fibers and may also be used for weaving the woven glass fiber fabric.

The scrim dimension of the woven glass fiber fabric layer (4) is 0.5-10 mm x 0.5-10 mm, preferably 2-5 mm x 2-5 mm, more preferably 2-3 mm x 2-3 mm. The term "scrim dimension" or "scrim size" refers to the size of the openings in the scrim structure of the woven layer. The scrim dimension of the layer of a woven glass fiber fabric (4) in the above defined ranges allows the easy introduction of fixings in the insulation panel (1) for its installation, for example in ventilated façades, without the need of additional tools.

The layer of a woven glass fiber fabric (4) preferably has a grammage from 15-100 g/m², more preferably between 30 and 90 g/m², even more preferably 45-60 g/m².

The layer of a woven glass fiber fabric (4) may reinforce the layer of non-woven mineral fibers (3), e.g. easing the handling of the insulation panel (1). Additionally, the woven glass fiber fabric (4) preferably located on the outer side of the insulation panel (1) may avoid the tearing of layer (3) when fixings are inserted, for example, when applied in ventilated façades.

In a first embodiment, the insulation panel (1) according to the present invention comprises:
- a board of glass wool (2),
- a layer of non-woven mineral fibers (3); and
- a layer of woven glass fiber fabric (4),
   wherein the layer of non-woven mineral fibers (3) is located between the board of glass wool (2) and the layer of the woven glass fiber fabric (4), so that one of the major surfaces of the board of glass wool (2) is covered by the layer of non-woven mineral fibers (3), and
   wherein the layer of woven glass fiber fabric (4) has a scrim dimension of 0.5-10 mm x 0.5-10 mm, preferably 2-5 mm x 2-5 mm, more preferably of 2-3 mm x 2-3 mm.

In a second embodiment, the insulation panel (1) according to the present invention comprises:
- a board of mineral wool (2),
- a layer of non-woven glass fibers (3); and
- a layer of a woven glass fiber fabric (4),
   wherein the layer of non-woven glass fibers (3) is located between the board of mineral wool (2) and the layer of the woven glass fiber fabric (4), so that one of the major surfaces of the board of mineral wool (2) is covered by the layer of non-woven glass fibers (3), and
   wherein the layer of woven glass fiber fabric (4) has a scrim dimension of 0.5-10 mm x 0.5-10 mm, preferably 2-5 mm x 2-5 mm, more preferably of 2-3 mm x 2-3 mm.

In a third embodiment, the insulation panel (1) according to the present invention comprises:
- a board of glass wool (2),
- a layer of non-woven glass fibers (3); and
- a layer of woven glass fiber fabric (4),
   wherein the layer of non-woven glass fibers (3) is located between the board of glass wool (2) and the layer of the woven glass fiber fabric (4), so that one of the major surfaces of the board of glass wool (2) is covered by the layer of non-woven glass fibers (3), and
   wherein the layer of woven glass fiber fabric (4) has a scrim dimension of 0.5-10 mm x 0.5-10 mm, preferably 2-5 mm x 2-5 mm, more preferably of 2-3 mm x 2-3 mm.

In a more preferred embodiment, the insulation panel (1) comprises a board of mineral wool (2), wherein the weight of the board of mineral wool (2) accounts for more than 92 wt.-%, more preferably for more than 95 wt.-% based on the weight of the total insulation panel (1).

In a particular embodiment of the present invention, the layer of non-woven mineral fibers (3) and the layer of a woven glass fiber fabric (4) are bonded together to form a laminate. "Laminate" in the sense of the present invention means a product that is made of at least two layers, which are bound together via their major surfaces. Layers (3) and (4) are preferably bonded by an adhesive and/or melt fusion to form the laminate. Suitable adhesives are for example polymer resins, such as polyurethane resins, acrylic resins, styrene-butadiene rubbers, urea-formaldehyde resins (UF-resins), melamine-formaldehyde resins (MF-resins), polyamide hotmelts, or mixtures thereof. Preferably, the open scrim structure of layer (4) is not closed after the lamination (bonding) process.

In a preferred embodiment, the laminate has a thickness of 200-1000 µm, more preferably 200-800 µm.

Preferably, the total grammage of the layer of non-woven mineral fibers (3) and the layer of woven glass fiber fabric (4), or of the laminate of layers (3) and (4) is preferably from 35-250 g/m², more preferably 60-150 g/m², even more preferably from 80-130 g/m².

In a preferred embodiment, the laminate of layers (3) and (4) has a higher stiffness than the board of mineral wool (2). It is understood that a layer stiffer than another layer, bends less under the same load.

In a preferred embodiment a laminate is attached to the board of mineral wool (2) such that the layer of non-woven mineral fibers (3) is located between the board of mineral wool (2) and the layer of the woven glass fiber fabric (4). The laminate or the layer of non-woven mineral fibers (3) may be attached to the board of mineral wool (2) by a binder. Thus, the laminate or the layer of non-woven mineral fibers (3) covers one of the major surfaces of the board of mineral wool (2). The binder attaching the layer of non-woven mineral fibers (3) to the board of mineral wool (2) is preferably an organic or inorganic binder, such as a phenol-formaldehyde binder.

The insulation panel (1) according to the invention preferably has a total density of 5-200 kg/m³, more preferably 5-50 kg/m³ and even more preferably 5-40 kg/m³.

The total thickness of the insulation panel (1) is preferably in the range of 20-300 mm, more preferably in the range of 60-200 mm.

In a preferred embodiment, the insulation panel (1) according to the invention is from 60-150 cm in length and/or from 30-120 cm in width.

In another preferred embodiment, the insulation panel (1) according to the invention is packed in the form of a roll.

In a preferred embodiment, the insulation panel (1) according to the invention further comprises an aluminum layer. The aluminum layer is preferably located on the major surface of the board of mineral wool (2) opposite to the layer of non-woven mineral fibers (3). That is, on the non-covered major surface of the board of mineral wool (2) which is opposite to the layer of non-woven mineral fibers (3). Figure 1B shows an exemplary schematic cross section of an insulation panel (1) of the invention comprising a board of mineral wool (2), a layer of non-woven mineral fibers (3), a layer of a woven glass fiber fabric (4) and an aluminum layer (5), wherein the board mineral wool (2) is located between the layer of non-woven mineral fibers (3) and the aluminum layer (5). Preferably, the aluminum layer is bonded to the board of mineral wool by a hot-melt adhesive; or inorganic binders, such as colloidal silica, sodium silicate or phosphates; or organic binders, such as phenol-formaldehyde binders. The aluminum layer is particularly made of an aluminum foil, preferably having a thickness of 5 to 100 µm. More preferably, the aluminum layer is an aluminum Kraft layer or a reinforced aluminum layer. A reinforced aluminum layer may be an aluminum layer which is reinforced with e.g. a glass veil, to confer more rigidity to the panel. The aluminum layer may particularly serve as a gas or vapor barrier in the insulation panel (1) of the invention.

Thus, in a preferred embodiment, the insulation panel (1) according to the present invention comprises:
- a board of mineral wool (2),
- a layer of non-woven mineral fibers (3);
- a layer of woven glass fiber fabric (4), and
- a layer of aluminum (5),
   wherein the layer of non-woven mineral fibers (3) is located between the board of mineral wool (2) and the layer of the woven glass fiber fabric (4), so that one of the major surfaces of the board of mineral wool (2) is covered by the layer of non-woven mineral fibers (3),
   wherein the layer of woven glass fiber fabric (4) has a scrim dimension of 0.5-10 mm x 0.5-10 mm, preferably 2-5 mm x 2-5 mm, more preferably of 2-3 mm x 2-3 mm, and wherein the layer of aluminum (5) is preferably located on the major surface of the board of mineral wool (2) opposite to the layer of non-woven mineral fibers (3).

In another preferred embodiment, the insulation panel (1) according to the present invention comprises:
- a board of glass wool (2),
- a layer of non-woven mineral fibers (3);
- a layer of woven glass fiber fabric (4), and
- a layer of aluminum (5),
   wherein the layer of non-woven mineral fibers (3) is located between the board of glass wool (2) and the layer of the woven glass fiber fabric (4), so that one of the major surfaces of the board of glass wool (2) is covered by the layer of non-woven mineral fibers (3), and
   wherein the layer of woven glass fiber fabric (4) has a scrim dimension of 0.5-10 mm x 0.5-10 mm, preferably 2-5 mm x 2-5 mm, more preferably of 2-3 mm x 2-3 mm, and wherein the layer of aluminum (5) is preferably located on the major surface of the board of glass wool (2) opposite to the layer of non-woven mineral fibers (3).

In another preferred embodiment, the insulation panel (1) according to the present invention comprises:
- a board of mineral wool (2),
- a layer of non-woven glass fibers (3);
- a layer of woven glass fiber fabric (4), and
- a layer of aluminum (5),
   wherein the layer of non-woven glass fibers (3) is located between the board of mineral wool (2) and the layer of the woven glass fiber fabric (4), so that one of the major surfaces of the board of mineral wool (2) is covered by the layer of non-woven glass fibers (3), and
   wherein the layer of woven glass fiber fabric (4) has a scrim dimension of 0.5-10 mm x 0.5-10 mm, preferably 2-5 mm x 2-5 mm, more preferably of 2-3 mm x 2-3 mm, and wherein the layer of aluminum (5) is preferably located on the major surface of the board of mineral wool (2) opposite to the layer of non-woven glass fibers (3).

In another preferred embodiment, the insulation panel (1) according to the present invention comprises:
- a board of glass wool (2),
- a layer of non-woven glass fibers (3); and
- a layer of woven glass fiber fabric (4), and
- a layer of aluminum (5),
   wherein the layer of non-woven glass fibers (3) is located between the board of glass wool (2) and the layer of the woven glass fiber fabric (4), so that one of the major surfaces of the board of glass wool (2) is covered by the layer of non-woven glass fibers (3) and
   wherein the layer of woven glass fiber fabric (4) has a scrim dimension of 0.5-10 mm x 0.5-10 mm, preferably 2-5 mm x 2-5 mm, more preferably of 2-3 mm x 2-3 mm, and wherein the layer of aluminum (5) is preferably located on the major surface of the board of glass wool (2) opposite to the layer of non-woven glass fibers (3).

In a more preferred embodiment, the aluminum layer (5) is located on the outer surface of the board of mineral wool or glass wool (2),that is on the non-covered major surface of the board of mineral wool or glass wool (2), opposite to the layer of non-woven mineral fibers or glass fibers (3).

Further, the present invention relates to a method for preparing an insulation panel (1) comprising the steps:
(a) providing a board of mineral wool (2),
(b) providing a layer of non-woven mineral fibers (3) attached to a layer of woven glass fiber fabric (4),
(c) attaching the layer of non-woven mineral fibers (3) of step (b) to the board of mineral wool (2),
   such that the layer of non-woven mineral fibers (3) is located between the board of mineral wool (2) and the layer of woven glass fiber fabric (4),
   wherein the layer of woven glass fiber fabric (4) is selected to a have a scrim dimension of 0.5-10 mm x 0.5-10 mm

Step (b) may be conducted using binders such as those described above.

Step (c) may be conducted using adhesives such as those described above.

In a further embodiment, the present invention relates to a method for preparing an insulation panel (1), comprising the steps
(a') providing a board of mineral wool (2),
(b') providing a laminate composed of a layer of non-woven mineral fibers (3) and a layer of woven glass fiber fabric (4),
(c') attaching the laminate of step (b') to the board of mineral wool (2) such that one major surface of the layer of non-woven mineral fibers (3) faces with the major surface of the board of mineral wool (2),
   wherein the layer of woven glass fiber fabric (4) is selected to a have a scrim dimension of 0.5-10 mm x 0.5-10 mm

Step (c') may be conducted using binders such as those described above.

In a further embodiment, the present invention relates to method for preparing an insulation panel (1), comprising the steps:
(a") providing a board of mineral wool (2),
(b") providing a layer of non-woven mineral fibers (3) attached to a layer of woven glass fiber fabric (4),
(c") attaching the layer of non-woven mineral fibers (3) of step (b) to the board of mineral wool (2),
   such that the layer of non-woven mineral fibers (3) is located between the board of mineral wool (2) and the layer of woven glass fiber fabric (4), and
(d") attaching a layer of aluminum (5) to the board of mineral wool (2) opposite to the layer of non-woven mineral fibers (3),
   wherein the layer of woven glass fiber fabric (4) is selected to a have a scrim dimension of 0.5-10 mm x 0.5-10 mm.

Step (b") may be conducted using binders such as those described above.

Step (c") may be conducted using adhesives such as those described above.

Step (d") may be conducted using binders such as those described above.

In a further embodiment, the present invention relates to method for preparing an insulation panel (1), comprising the steps:
(a'") providing a board of mineral wool (2),
(b'") providing a laminate composed of a layer of non-woven mineral fibers (3) and a layer of woven glass fiber fabric (4),
(c'") attaching the laminate of step (b'") to the board of mineral wool (2) such that one major surface of the layer of non-woven mineral fibers (3) faces with the major surface of the board of mineral wool (2), and
(d'") attaching a layer of aluminum (5) to the board of mineral wool fibers (2) opposite to the layer of non-woven mineral fibers (3),
   wherein the layer of woven glass fiber fabric (4) is selected to a have a scrim dimension of 0.5-10 mm x 0.5-10 mm.

Step (c'") may be conducted using binders such as those described above.

Step (d'") may be conducted using binders such as those described above.

Both major surfaces of the board of mineral wool (2) are formed by the length of the board of mineral wool (2) multiplied with the width of the board, i.e. each major surface of the board of mineral wool (2) extends perpendicularly to the thickness of the board of mineral wool (2).

Correspondingly, both major surfaces of the layer of non-woven mineral fibers (3) are formed by the length of the layer of non-woven mineral fibers (3) multiplied with the width of the layer of non-woven mineral fibers (3), i.e. each major surface of the layer of non-woven mineral fibers (3) extends perpendicularly to the thickness of the layer of non-woven mineral fibers (3).

Correspondingly, both major surfaces of the layer of woven glass fiber fabric (4) are formed by the length of the layer of woven glass fiber fabric (4) multiplied with the width of the layer of woven glass fiber fabric (4), i.e. each major surface of the layer of woven glass fiber fabric (4) extends perpendicularly to the thickness of the layer of woven glass fiber fabric (4).

In order to form the laminate of the layer of non-woven mineral fibers (3) and the layer of woven glass fiber fabric (4), one major surface of the layer of non-woven mineral fibers (3) is attached to one major surface of the layer of woven glass fiber fabric (4). The laminate is attached to the board of mineral wool (2) by attaching the major surface of the layer of non-woven mineral fibers (3) in the laminate to one of the major surfaces of the board of mineral wool (2).

For embodiments comprising additionally an aluminum layer (5), the aluminum layer is preferably attached to the other major surface of the board of mineral wool (2) opposite to the layer of non-woven mineral fibers (3), as Fig. 1B shows.

The present invention also relates to an insulation panel (1) obtainable by a method as described above.

The insulation panel (1) according to the invention is preferably classified under Euroclass A1 according to EN 13501-1:2019. The insulation panel (1) according to the invention preferably has a thermal conductivity λ of ≤ 0.040 W (K m)⁻¹, preferably from 0.029-0.040 W (K m)⁻¹, more preferably from 0.030-0.038 W (K m)⁻¹, and even more preferably from 0.032-0.035 W (K m)⁻¹ measured according to EN 12667:2002/EN 12939:2001.

Another aspect of the present invention refers to building outer walls comprising a supporting wall and at least one insulation panel (1) according to the invention.

The supporting wall can be made of materials suitable for outer walls, such as brick stones, concrete, wood, and glass.

In a preferred embodiment of the building outer wall, the insulation panel (1) according to the invention is in direct contact with the supporting wall, more preferably the board of mineral wool (2) directly contacts the supporting wall. The compressible board of mineral wool allows a close clinching of the insulation panel (1) to the structure of the supporting wall, thereby avoiding spaces between the wall and the insulation panel (1). Advantageously, the insulation panel (1) adapts itself to contours and irregularities that might be present on the surface of the supporting wall, thereby allowing an easy and even mounting of the insulation panel (1) to the supporting wall. The supporting wall particularly includes vertical, horizontal and sloping walls.

In preferred embodiments of the building outer wall, the insulation panel (1) according to the invention is attached to the supporting wall by organic adhesives, inorganic adhesives and/or mechanical fixings.

Suitable organic adhesives are e.g. polyurethane or silicone elastic adhesives (e.g. from MS polymer). Inorganic adhesives may be hydraulic binders, such as mortars or mortar glue.

The mechanical fixings particularly have a shaft sufficient long to be pierced through the insulation panel (1) starting from the layer of woven glass fiber fabric (4) and to be anchored in the supporting wall. The shaft of the mechanical fixing preferably has a diameter of about 0.4-9.5 mm, more preferably of 2-5 mm, and a length of preferably 25-500 mm, preferably 30-400 mm. The above dimensions of the fixings refer to standard fixings as used in the art and allow an easy penetration of the fixings through the woven glass fiber fabric layer (4), the non-woven mineral fiber layer (3) and the board of mineral wool (2) without any previous treatment of the insulation panel (1), such as cutting or drilling.

Thus, in a further aspect, the present invention refers to a kit comprising an insulation panel (1) according to the invention and mechanical fixings having a diameter of about 0.4-9.5 mm, more preferably of 2-8 mm, even more preferably of about 8 mm, and a length of preferably 25-500 mm. Particularly, the length of the mechanical fixings is selected according to the total thickness of the insulating panel.

The insulation panels (1) according to the invention are particularly used for thermal and/or sound insulation.

Preferably, the insulation panel (1) according to the invention can be used for façades, preferably for ventilated façades. Thus, one aspect of the invention refers to a fagade, preferably ventilated façade, comprising at least one insulation panel (1) according to the invention. Preferably the façade is a ventilated façade. In a particular embodiment, the present invention relates to a façade, preferably a ventilated façade, comprising at least one insulation panel (1) according to the present invention, wherein the insulation panel has a density of between 20 and 50 kg/m³.

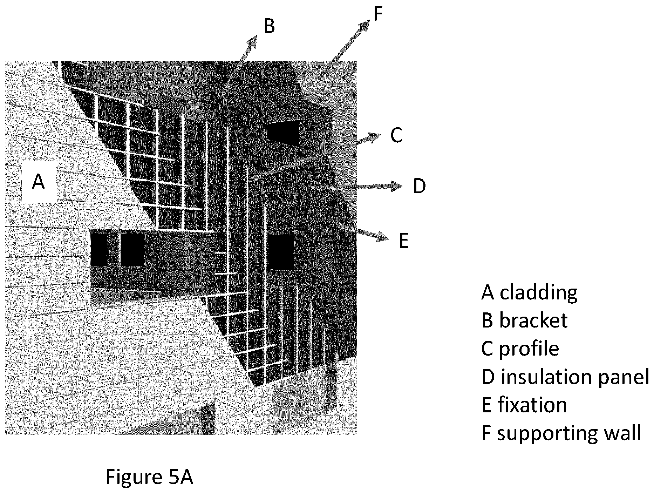

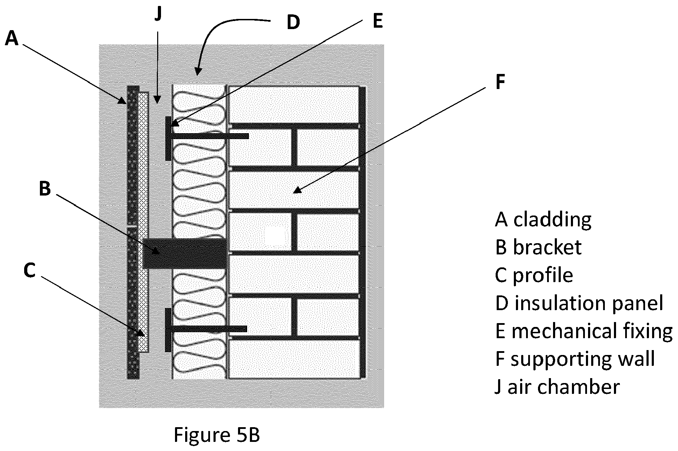

Ventilated façades have found much attention in the field of construction insulation. Ventilated façades allow for the circulation of air between the insulated supporting wall and a cladding material, such as decorative materials, e.g. stone, tiles, metallic panels, wood, etc. In a particular embodiment, the façade of the invention, preferably ventilated façade, further comprises a supporting wall and a cladding layer. A schematic diagram of common ventilated façades is shown in Figures 5A and 5B, wherein a cladding layer (A) is anchored to the supporting wall (F) through the insulation panel (D). Between cladding layer and insulation panel an air chamber (J) is formed that allows for ventilation thereby exchanging the air contained in the air chamber by the so-called "chimney effect".

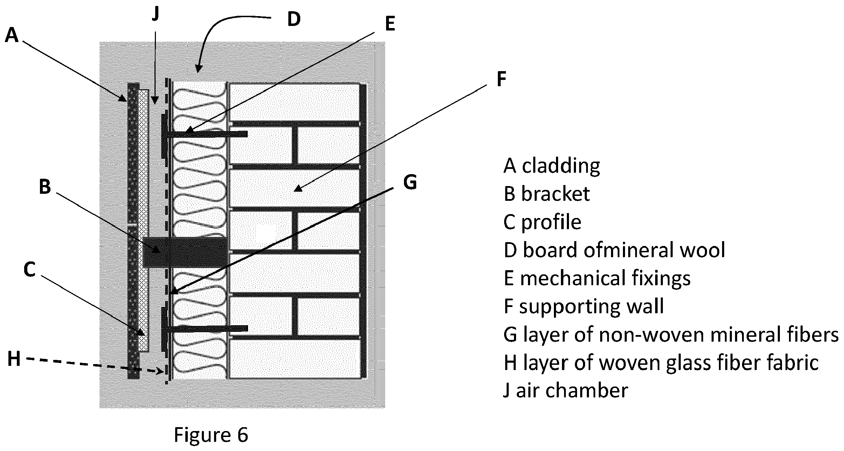

A schematic diagram of an exemplary ventilated façade according to the invention, is shown in Figure 6. According to the invention, the ventilated façade may comprise
- a cladding layer (A), e.g. of conventional facade materials, such as stone, tiles, metallic panels, glass, wood, etc.,
- at least one insulation panel (1) according to the invention comprising a board of mineral wool (D) attached to a layer of non-woven mineral fibers (G) and a layer of woven glass fiber fabric (H), wherein the layer of non-woven mineral fibers (G) is located between the board of mineral wool (D) and the layer of the woven glass fiber fabric (H), being the board of mineral wool (D) attached to
- the supporting wall (F), and
- an air chamber (J) formed between the insulation panel and the cladding layer (A), preferably having a gap size of 1-10 cm (= distance between insulation panel and cladding layer).

The insulation panel can be attached to the supporting wall (F) through mechanical fixings (E), as Fig. 6 shows.

The present invention also relates to the use of an insulation panel (1) for ducts, preferably for ventilation ducts, and air conditioning ducts. In another aspect, the invention refers to a duct comprising one insulation panel (1) according to the invention. Preferably, said duct is an air conditioning duct or ventilation duct, more preferably an air conditioning duct.

In a preferred embodiment, the present invention relates to a duct, comprising at least one insulation panel (1) according to the invention.

In a preferred embodiment, the present invention relates to a duct, preferably ventilation duct or air conditioning duct, comprising at least one insulation panel (1) according to the invention, wherein the insulation panel (1) has a thickness of between 20 and 50 mm.

In a preferred embodiment, the present invention relates to a duct, preferably ventilation duct or air conditioning duct, comprising at least one insulation panel according to the invention, wherein the insulation panel (1) has a density comprised between 50 and 90 kg/m³.

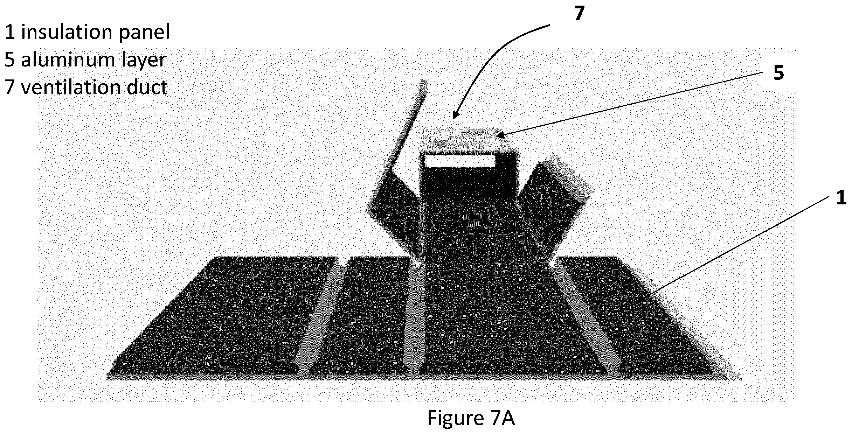

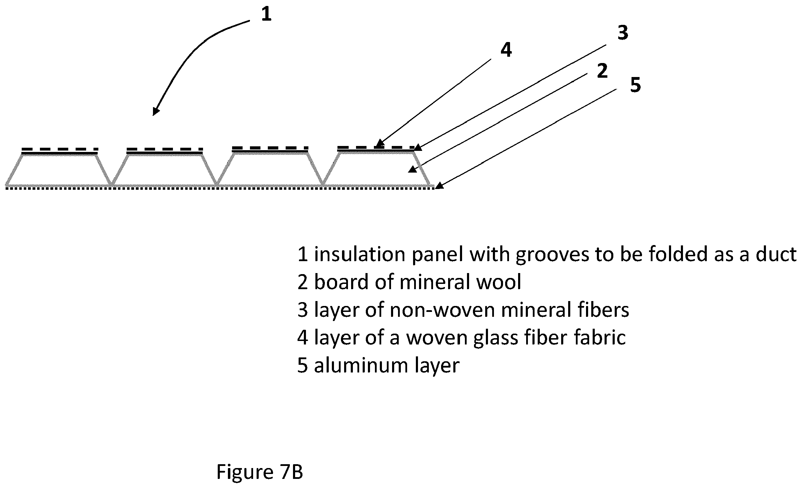

The insulation panels (1) according to the invention have high thermal and sound insulation characteristics that make them highly suitable for ducts, particularly for ducts through which air can flow. The insulation panels (1) according to the invention are even more suitable in such applications, if they bear an aluminum layer (5) as described above. Preferably this layer is located at the non-covered major surface of the board of mineral wool (2) as described above, that is the aluminum layer (5) located towards the outside of the duct, while the layer of the woven glass fiber fabric (4) is located towards the hole of the duct (see Figures 7A and 7B). The layer of non-woven mineral fibers (3) is located between the board of mineral wool (2) and the layer of woven glass fiber fabric (4), as shown in the scheme of Fig 7B. The aluminum layer provides an air- and vapor-tight barrier layer.

The present invention is illustrated in more detail by the following examples, however, is not limited thereto.

### Example 1 (according to the invention)

An insulation panel (1) is made of a board of glass wool (2) and a laminate having a non-woven glass fiber veil (3) and a woven glass fiber scrim (4) having a mesh width of 2.5 x 2.5 mm.

The characteristics of the different layers are shown in Table 1.

Sample size (length x width) of the insulation panel: 1350 x 600 mm.

The laminate is produced by laminating layer (3) on layer (4) using modified UF-resin binder at a grammage of about 10 g/m².

The laminate and the glass wool board (2) are joined so that the layer of non-woven mineral fibers (3) of the laminate faces the board of glass wool (2). The board of glass wool (2) is joined to the laminate by a phenol-formaldehyde resin that is the same binder that binds the glass fibers in the board of glass wool.

**Table 1: Characteristics of the board of glass wool (2) and the different layers (3, 4) in the insulation panel according to Example 1**

| | board (2) | layer (3) | layer (4) | Laminate | insulation panel |
|---|---|---|---|---|---|
| grammage [g/m²] | | 40 | 45 | 85 | |
| Density [kg/m³] | 30 | - | - | - | 30 |
| Thickness [mm] | 100 | | | 0.7 | 100 |
| thermal conductivity [W/mK] | 0.032 | - | - | - | 0.032 |

### Comparative Example 1

The board of glass wool (2) as described in Example 1 has been covered by a non-woven glass fiber veil as specified for layer (3) in Example 1. The board of glass wool (2) and the non-woven glass fiber veil (3) are joined by a phenol-formaldehyde resin.

### Comparative Example 2

The board of glass wool (2) as specified in Example 1 is joined with a woven glass fiber fabric (4) having a grammage of about 82 g/m² and with a scrim dimension (mesh width) of about 0.1 x 0.1 mm. The woven glass fiber fabric (4) is coated with a hot-melt adhesive of polyethylene having a grammage of about 25 g/m², resulting in a total grammage of the woven glass fabric (4) with the adhesive coating of about 107 g/m². The woven glass fiber fabric is joined to the board of glass wool by the hot-melt adhesive coating of the woven glass fiber fabric. Thereby, the hot-melt adhesive completely closes the pores of the scrim structure.

All samples have been subjected to an installation, weathering and rain resistance test.

### a.) Installation test

All samples are hand-pierced with SPIT CB anchors for fixing semi rigid insulation, having a head diameter of 90 mm, shaft diameter of 8 mm and anchor depth of 20-30 mm for ventilated facades perpendicular to the major faces of the panels. The results of the test, namely the capability of the samples to be pierced by hand, potential tearing of the facings and insulation characteristics are summarized in Table 2:

**Table 2: Results of piercing tests**

| **Test** | **Example 1** | **Comparative Example 1** | **Comparative Example 2** |
|---|---|---|---|
| Piercing capability | yes | yes | no |
| Facing tear | no | yes | no |
| Thermal conductivity [W/mK] | 0,032 | 0,035 | 0,032 |

It has been found that piercing by hand is only possible with Example 1 and with Comparative Example 1, while piercing of Comparative Example 2 is only possible if the facing is previously cut with a knife before installing the fixing. However, the high risk of tearing of the facing in Comparative example 1 would make also necessary cutting it with a knife before the installation of the fixation.

### b.) Weathering resistance

The above panels have been attached to a wall which has been exposed to weather conditions with strong wind, heavy rain, high temperatures and sunlight for three months.

Installed Comparative example 1 (applied with pre-treatment with a knife) which has been subjected to weathering as described above suffers tearing of the facing in the corners and joints where is most exposed to wind. Figure 2A shows a picture of the panel after being exposed to weathering. The figure shows that indeed the panel suffers tearing of the facing of the corners and joints more exposed to wind.

Installed Comparative example 2 (applied with pre-treatment with a knife) which has been subjected to weathering as described above suffers from peeling off the facing due to the high grammage and the closed scrim of the woven fabric that do not allow the wind to go through, producing said effect. Figure 3 shows a region of the panel after being subjected to weathering. Facing of the corner that has been peeled off can be observed.

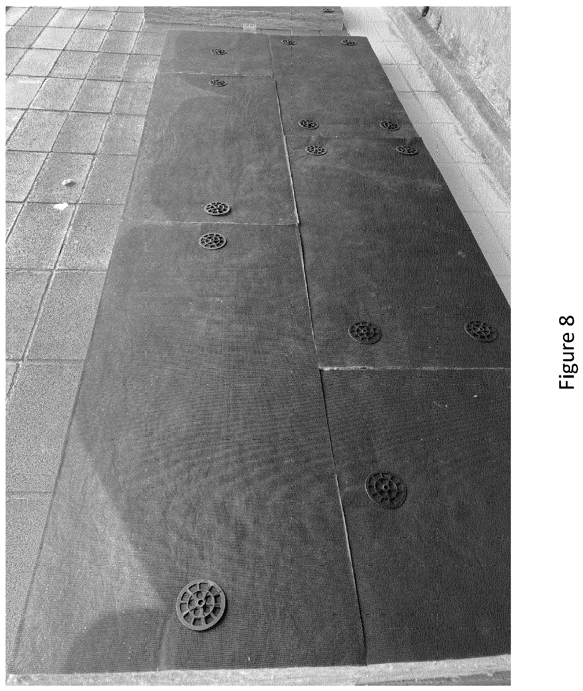

Example 1 (= inventive sample) withstands the weather conditions without peeling off (Figure 8).

The experiments show that the insulation panel (1) according to the invention can be easily installed. Moreover, the insulation panels (1) of the invention withstand harsh weathering conditions without peeling off or tearing.

The following items are subject of the present invention:
1. Insulation panel (1) comprising:
   - a board of mineral wool (2),
   - a layer of non-woven mineral fibers (3); and
   - a layer of a woven glass fiber fabric (4),
      wherein the layer of non-woven mineral fibers (3) is located between the board of mineral wool (2) and the layer of the woven glass fiber fabric (4), and
      wherein the layer of woven glass fiber fabric (4) has a scrim dimension of 0.5-10 mm x 0.5-10 mm.
2. Insulation panel (1) according to item 1, wherein the layer of woven glass fiber fabric (4) has an orthogonal scrim structure.
3. Insulation panel (1) according to item 1 or 2, wherein the layer of woven glass fiber fabric (4) has a scrim dimension of 2-5 mm x 2-5 mm, preferably of 2-3 mm x 2-3 mm.
4. Insulation panel (1) according to any of the preceding items, wherein the layer of non-woven mineral fibers (3) and the layer of woven glass fiber fabric (4) together form a laminate.
5. Insulation panel (1) according to any of the preceding items, wherein the layer of non-woven mineral fibers (3) and the layer of woven glass fiber fabric (4) are bonded by an adhesive and/or by melt fusion to form a laminate.
6. Insulation panel (1) according to any of items 4 or 5, wherein the laminate is attached to the board of mineral wool (2) by a binder.
7. Insulation panel (1) according to any of the preceding items, wherein the total grammage of the layer of non-woven mineral fibers (3) and the layer of woven glass fiber fabric (4), or of the laminate of layers (3) and (4) is from 35 to 250 g/m², preferably from 60 to 150 g/m², more preferably from 80 to 130 g/m².
8. Insulation panel (1) according to any of the preceding items, wherein the grammage of the layer of non-woven mineral fibers (3) is between 20 and 150 g/m², preferably 40 and 50 g/m².
9. Insulation panel (1) according to any of the preceding items, wherein the grammage of the layer of a woven glass fiber fabric (4) is from 15 to 100 g/m², preferably 45 to 60 g/m².
10. Insulation panel (1) according to any of the preceding items, wherein the mineral wool in the board of mineral wool (2) is selected from glass wool, stone wool or ceramic wool, preferably glass wool.
11. Insulation panel (1) according to item 10, wherein the glass wool is laminar or crimped glass wool, preferably laminar glass wool.
12. Insulation panel (1) according to any of the preceding items, wherein the board of mineral wool (2) has a thickness of about 18-300 mm, preferably 60-200 mm.
13. Insulation panel (1) according to any of items 4-12, wherein the laminate has a thickness of 200-1000 µm, preferably 200-800 µm.
14. Insulation panel (1) according to any of the preceding items, wherein the board of mineral wool (2) has a density of 5-180 kg/m³, preferably 5-45 kg/m³, more preferably 20-45 kg/m³.
15. Insulation panel (1) according to any of the preceding items, which has a thermal conductivity λ ≤ 0.040 W (K m)⁻¹, preferably from 0.029 to 0.040 W (K m)⁻¹, more preferably from 0.030 - 0.038 W (K m)⁻¹, and even more preferably from 0.032 to 0.035 W (K m)⁻¹, measured according to EN 12667:2002 / EN 12939:2001.
16. Insulation panel (1) according to any of the preceding items, falling under Euroclass A1 (EN 13501-1:2019).
17. Insulation panel (1) according to any of the preceding items, further comprising an aluminum layer, preferably located on the major surface of the board of mineral wool (2) opposite to the layer of non-woven mineral fibers (3).
18. Insulation panel (1) according to item 17, wherein the aluminum layer is an aluminum Kraft layer or a reinforced aluminum layer.
19. Building outer wall comprising a supporting wall and at least one insulation panel (1) according to any of items 1-18.
20. Building outer wall according to item 19, wherein the insulation panel (1) is in direct contact to the supporting wall.
21. Building outer wall according to item 20, wherein the board of mineral wool (2) directly contacts the supporting wall.
22. Building outer wall according to any of items 19-21, wherein the insulation panel (1) is attached to the supporting wall by organic adhesives, inorganic adhesives, and/or mechanical fixings.
23. Use of an insulation panel (1) according to any of items 1-18 for thermal and/or sound insulation.
24. Use of an insulation panel (1) according to any of items 1-18 for façades, preferably for ventilated façades.
25. Ventilated façade comprising at least one insulation panel (1) according to any of items 1-18, wherein the insulation panel (1) preferably has a density of between 20 and 50 kg/m³.
26. Ventilated façade according to item 25, further comprising a supporting wall and a cladding layer.
27. Use of an insulation panel (1) according to any of items 1 to 18, for ducts, preferably for ventilation ducts, and air conditioning ducts.
28. Use of an insulation panel (1) according to item 27, wherein the insulation panel (1) has a thickness of between 20 and 50 mm and/or a density comprised between 50 and 90 kg/m³.
29. Duct, preferably ventilation duct or air conditioning duct, comprising at least one insulation panel (1) according to any of items 1-18.
30. Duct, preferably ventilation duct or air conditioning duct, according to item 29, wherein the insulation panel (1) has a thickness of between 20 and 50 mm.
31. Duct, preferably ventilation duct or air conditioning duct, according to item 29 or 30, wherein the insulation panel (1) has a density comprised between 50 and 90 kg/m³.
32. A method for preparing an insulation panel (1) according to any of items 1-18 comprising the steps
   (a) providing a board of mineral wool (2),
   (b) providing a layer of non-woven mineral fibers (3) attached to a layer of woven glass fiber fabric (4),
   (c) attaching the layer of non-woven mineral fibers (3) of step (b) to the board of mineral wool (2), such that the layer of non-woven mineral fibers (3) is located between the board of mineral wool (2) and the layer of woven glass fiber fabric (4), wherein the layer of woven glass fiber fabric (4) is selected to a have a scrim dimension of 0.5-10 mm x 0.5-10 mm, and
   (d) optionally attaching a layer of aluminum (5) to the board of mineral wool fibers (2) opposite to the layer of non-woven mineral fibers (3).

## Claims

1. Insulation panel (1) comprising:
- a board of mineral wool (2), preferably having a density of 5-180 kg/m³ and/or a thickness of about 18-300 mm,
- a layer of non-woven mineral fibers (3), preferably having a grammage between 20 and 150 g/m², and
- a layer of a woven glass fiber fabric (4), preferably having a grammage of 15 to 100 g/m²,
wherein the layer of non-woven mineral fibers (3) is located between the board of mineral wool (2) and the layer of the woven glass fiber fabric (4), and
wherein the layer of woven glass fiber fabric (4) has a scrim dimension of 0.5-10 mm x 0.5-10 mm.

2. Insulation panel (1) according to claim 1, wherein the layer of non-woven mineral fibers (3) and the layer of woven glass fiber fabric (4) are bonded by an adhesive and/or by melt fusion, preferably to form a laminate, the laminate preferably has a thickness of between 200 and 1000 µm.

3. Insulation panel (1) according to claim 2, wherein the laminate is attached to the board of mineral wool (2) by a binder.

4. Insulation panel (1) according to any of the preceding claims, wherein the total grammage of the layer of non-woven mineral fibers (3) and the layer of woven glass fiber fabric (4), or of the laminate of layers (3) and (4) is from 35 to 250 g/m², preferably from 60 to 150 g/m², more preferably from 80 to 130 g/m².

5. Insulation panel (1) according to any of the preceding claims, wherein the mineral wool of the board of mineral wool (2) is selected from glass wool, stone wool, ceramic wool, or mixtures thereof, preferably laminar or crimped glass wool.

6. Insulation panel (1) according to any of the preceding claims, further comprising an aluminum layer, such as aluminum Kraft layer or a reinforced aluminum layer.

7. Insulation panel (1) according to claim 6, wherein the aluminum layer is located on the major surface of the board of mineral wool (2) opposite to the layer of non-woven mineral fibers (3).

8. Building outer wall comprising a supporting wall and at least one insulation panel (1) according to any of claims 1-5, wherein the insulation panel (1) is preferably in direct contact to the supporting wall, more preferably wherein the board of mineral wool (2) directly contacts the supporting wall.

9. Building outer wall according claim 8, wherein the insulation panel (1) is attached to the supporting wall by organic adhesives, inorganic adhesives, and/or mechanical fixings.

10. Use of an insulation panel (1) according to any of claims 1-7 for thermal and/or sound insulation.

11. Use of an insulation panel (1) according to any of claims 1-5 for façades, preferably for ventilated façades.

12. Façade, preferably ventilated façade, comprising at least one insulation panel (1) according to any of claims 1-5, wherein the insulation panel preferably has a density of between 20 and 50 kg/m³.

13. Façade, preferably ventilated façade, according to claim 12, further comprising a supporting wall and a cladding layer.

14. Use of an insulation panel according to any of claim 1-7, for ducts, preferably for ventilation ducts, and air conditioning ducts.

15. Duct, preferably ventilation duct or air conditioning duct, comprising an insulation panel (1) according to any of claims 1-7.

16. Duct, preferably ventilation duct or air conditioning duct, according to claim 15, wherein the insulation panel (1) has a thickness of between 20 and 50 mm.

17. Duct, preferably ventilation duct or air conditioning duct, according to claim 15 or 16, wherein the insulation panel (1) has a density comprised between 50 and 90 kg/m³.

18. A method for preparing an insulation panel (1) according to any of claims 1-7 comprising the steps
(a) providing a board of mineral wool (2),
(b) providing a layer of non-woven mineral fibers (3) attached to a layer of woven glass fiber fabric (4),
(c) attaching the layer of non-woven mineral fibers (3) of step (b) to the board of mineral wool (2), such that the layer of non-woven mineral fibers (3) is located between the board of mineral wool (2) and the layer of woven glass fiber fabric (4), wherein the layer of woven glass fiber fabric (4) is selected to a have a scrim dimension of 0.5-10 mm x 0.5-10 mm, and
(d) optionally attaching a layer of aluminum (5) to the board of mineral wool fibers (2) opposite to the layer of non-woven mineral fibers (3).
